# EUROPÄISCHE PATENTSCHRIFT

(11) **EP 0 650 932 B1**
(45) Veröffentlichungstag und Bekanntmachung des Hinweises auf die Patenterteilung: **26.04.2000**
(21) Anmeldenummer: 94250252.7
(22) Anmeldetag: 14.10.1994
(51) Int. Cl.: C02F 3/20

(54) **Verfahren für die Behandlung von Abwasser**
Process for the treatment of waste water
Procédé pour le traitement de l'eau usée

(30) Priorität: 14.10.1993 DE 9315945 U
(43) Veröffentlichungstag der Anmeldung: 03.05.1995
(73) Patentinhaber: Messner, Georg, 91094 Bräuningshof (DE)
(72) Erfinder: Messner, Georg, 91094 Bräuningshof (DE)
(74) Vertreter: Böhme, Volker, Dipl.-Ing.

(56) Entgegenhaltungen:
- WO-A-92/21619
- DE-A- 3 639 572
- DE-A- 4 110 026
- FR-A- 2 340 277
- FR-A- 2 436 630

## Beschreibung

Die Erfindung bezieht sich auf ein Verfahren für die Behandlung von Abwasser gemäß Oberbegriff des Anspruchs 1.

Bei einem bekannten (DE-A-41 10 026) Verfahren dieser Art erfolgt die Abscheidung des Großteils aller Feststoffe unterhalb der Einrichtung, die für eine äußerst feinblasige Verteilung des Luftstromes sorgt. Die Abscheidung erfolgt mittels der Schwerkraft unter Bildung eines Sumpfes in einem Schlammauffang. Wenn man den Schlammauffang als Boden des gesamten Behälters betrachtet, dann ist der Boden mit Abstand unterhalb der Einrichtung für die feinblasige Verteilung angeordnet. Es erfolgt also die äußerst feinteilige Verteilung des Luftstromes mittels der Einrichtung mit Abstand oberhalb des Bodens.

Es ist auch ein Flotationsverfahren bekannt (DE-Buch 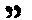 Versuchsanlagen zur Entspannungsflotation von Abwasser", 1982; Titelseite, Copyright-Seite, Seiten 90, 178 und 179), bei dem Abwasser in einem Flockungsbecken aufbereitet wird. Das Abwasser gelangt dann an das untere Ende einer Blasen-Feststoff-Kontaktzone. Dem unteren Ende dieser Kontaktzone wird von einem Druckkessel her eine Wasser-Luftblasen-Mischung zugeführt. Das mit den Luftblasen versetzte Abwasser gelangt aus der Kontaktzone in eine Flotationszone. Die Abscheidung des Großteils der Feststoffe erfolgt an der Oberfläche der Flotationszone durch den Auftrieb der Luftblasen. Vom Boden der Flotationszone gehen keine Luftblasen aus.

Die Behandlung von Abwasser gewinnt in neuerer Zeit immer stärker an Bedeutung. Es wurden bereits zahlreiche Vorschläge zur Verbesserung der Abwasserbehandlung gemacht.

In der DE-A-29 36 826 werden ein Verfahren und eine Vorrichtung beschrieben, bei der das die Trägerkörper enthaltende Belüftungsbecken im Bereich seiner Bodenfläche Einlaßöffnungen des Abwasserzulaufs sowie für ein Belüftungsgas aufweist, wobei mindestens ein Ablauf im Bereich der Wasseroberfläche des Belüftungsbeckens angeordnet ist. Bei dieser Vorrichtung strömen Abwasser und Belüftungsgas im Gleichlauf. Die aufsteigenden Luftblasen sollen einerseits den von den Mikroorganismen benötigten Sauerstoff liefern und andererseits einen der Sinkbewegung der Trägerkörper entgegenwirkenden Gasstrom erzeugen, welcher eine dynamisch stabile Verteilung erreicht.

Aus der DE-A-32 12 398 ist eine Aufbereitungsvorrichtung bekannt, die als kontinuierlich arbeitende Schönungsvorrichtung mit einem Gefäß arbeitet, welches einen Bodenteil und vorzugsweise eine zylindrisch sich nach oben erstreckende Seitenwand aufweist, um so darinnen einen Flüssigkeitsraum zu definieren, der mindestens teilweise mit einem Flockungsmittelträger angefüllt ist und ein sich bewegendes Medienbett bildet, wobei die Strömung normalerweise nach unten durch das Bett erfolgt. Eine Reinwasserausgangsleitung gestattet die Abgabe gereinigter Flüssigkeit aus dem Gefäß.

Aus der DE-A-32 27 671 ist ein Belüftungskörper aus porösem Material zum Eintragen von Luft oder Sauerstoff in Form kleiner Blasen in das Abwasser biologischer Reinigungsanlagen oder natürlicher Gewässer bekannt, wobei trotz hohem spezifischen Luftdurchsatz und trotz der Verteilung der Luft in feinsten Blasen ein Verstopfen der Poren bei geringem Eigenleistungsbedarf vermieden wird, indem das poröse Material eine aus Fasern bestehende Filzstruktur aufweist.

Aus der DE-A-40 21 366 sind ein Verfahren und eine Vorrichtung zum Gaseintrag in eine Flüssigkeit bekannt, bei der das Gas in einen Flüssigkeitsstrom in Strömungsrichtung gleichmäßig verteilt eingetragen wird. Dabei soll mindestens ein perforierter Begasungsschlauch in einer für den Flüssigkeitsstrom vorgesehenen Leitung longitudinal verlegt sein.

Aus der DE-A-41 02 781 schließlich ist ein Verfahren zur Umrüstung einer Kleinkläranlage bekannt, bei dem eine Leitung entlang ihres Weges unterbrochen und in das Vorklärbecken oder ein separates Sedimentationsbecken oder Depot geführt wird, wobei das Belüftungsrohr bis auf den Boden des Belüftungsraums verlängert ist und am Boden verlaufende Belüftungselemente angeschlossen sind.

Der Erfindung liegt die Aufgabe zugrunde, eine Trennung und Konzentration der Biomasse in Wasser je nach Art und Alter zu erreichen.

Die Lösung dieser Aufgabe erfolgt erfindungsgemäß durch die Merkmale des Anspruchs 1.

Vorteilhafte Weiterbildungen ergeben sich aus den Unteransprüchen.

Die Erfindung wird nachfolgend unter Bezugnahme auf die Zeichnungsfigur beispielsweise erläutert, die einen Längsschnitt durch einen Behandlungsbehälter zeigt.

In einem aufrechtstehenden eingerichteten Trennraum 10 mit ggfs. großer Grundfläche in Relation zur Höhe bei gleichzeitig hinreichender Höhe wird von oben her über einen Zulauf 11 das Abwasser in Richtung der Pfeile A zugeführt. Auf der Unterseite bei einem Boden 12 des eingerichteten Trennraums 10 wird Luft in äußerst feinblasiger Form zugeführt. Die Luftblasen L treten aus einem Diffusor 12 a aus, steigen auftriebsbedingt nach oben und bilden somit einen Gegenstrom zum Abwasser, das vom oberen Zulauf 11 innerhalb des eingerichteten Trennraums 10 nach unten strömt. Der Gegenstrom der äußerst feinen Luftblasen wirkt für das entgegenströmende Abwasser wie ein feinmaschiges Sieb und hindert damit die im Abwasser enthaltenen Feststoffbestandteile am Absinken. Dabei wird auch die Friktion der Oberflächen in der Grenzschicht Luft/Flüssigkeit ausgenutzt.

Wegen der Feinblasigkeit besteht darüber hinaus auch eine große Tendenz der Luftblasen, sich an den Festkörperbestandteilen anzulagern und diesen damit Auftrieb zu verleihen.

Im Ergebnis rührt dies dazu, daß sich an der Oberfläche ein Großteil aller Feststoffe abscheidet und abgetrennt werden kann. Es kann eine bis zu 20 % höhere Konzentration der Feststoffanteile erreicht werden. Es ist eine Überlauf vorrichtung 13 vorhanden.

Dabei können als Feststoffe auch Bakterien verstanden werden. Eine Vielzahl von Bakterien kann sich zu einer sogenannten Bakterienflocke zusammenschließen und wird dann als Biomasse bezeichnet.

Zur Verstärkung des weiter oben beschriebenen Effektes der Trennung können auch noch eine oder mehrere Trennflächen 14 im eingerichteten Trennraum 10 vorgesehen sein, die sich durch den Luftblasenstrom selbstständig reinigen. Insbesondere Feststoffe mit geringem spezifischen Gewicht oder mit großen Oberflächen, die bei einer eventuellen nachfolgenden Trennung störend sein könnten, werden an der Oberfläche des Trennraums konzentriert und können dort abgetrennt oder abgesaugt werden. Das somit noch verbleibende Feststoff-Flüssigkeitsgemisch weist nur noch eine relativ geringe Feststoffkonzentration auf.

Es hat sich als vorteilhaft erwiesen, an der Oberfläche des Trennraums eine Skim-Vorrichtung 15 zu montieren; diese kann an eine Pumpe angeschlossen werden. Das Konzentrat kann aber auch als Gas-Wasser-Feststoff-Schwall abgeführt werden.

Wie bereits zuvor erwähnt, können zur Verstärkung des erwünschten Effektes noch zusätzliche Trennflächen 14 in Form von Gittern oder Lamellen eingebaut werden. Dabei drängt die durch die Trennflächen 14 aufsteigende Luft die Feststoffe zurück und konzentriert sie an der Oberfläche des Trennraums, während die Flüssigkeit durch den hydraulischen Druck durch die Trennflächen 14 hindurchgeführt wird. In der Nähe des Bodens 12 wird das verbleibende Phasengemisch über einen Ablauf 16 wieder aus dem Trennraum 10 herausgeführt.

Durch die oben beschriebenen Schritte zur Abführung von Feststoffkonzentration wird die Leistungsfähigkeit der Anlage deutlich erhöht. Bei den herkömmlichen Systemen werden alle im Prozess vorhandenen Feststoffe - auch die mit schlechten Absetz- und Filtereigenschaften - der nachfolgenden Trennung zugeführt.

Bei starkem Zulauf könnte der Strom des Abwassers von oben nach unten so stark werden, daß er die Geschwindigkeit der aufsteigenden Luftblasen übersteigt, den Strom der Luftblasen mit nach unten reißt und damit die an sich erwünschte Wirkung der Durchmischung des Abwasserstroms mit den Luftblasen praktisch ausschließt. Für diesen Fall ist ein mit einen geeigneten Verschluß 18 versehener zusätzlicher Zulauf 17 in Nähe des Bodens 12 vorgesehen, der ggfs. für einen Spülstoß oder dann geöffnet wird, wenn der Abwasserstrom - beispielsweise bei starken Regenfällen - das für eine einwandfreie Funktion im eingerichteten Trennraum 10 verträgliche Maß überschreitet. Über den zusätzlichen Zulauf 17 des Abwassers unten wird praktisch ein Teil des Abwassers in Querrichtung in der Nähe des Bodens 12 im Kurzschluß durch den eingerichteten Trennraum 10 in Richtung auf den Ablauf 16 hindurchgeführt.

Bei Prozessen mit Bakterien erreicht man mit der Vorrichtung auch eine Trennung nach Art und Alter der Biomasse, die sich nach spezifischen Gewicht und Oberflächen unterscheiden. Dies wiederum führt zu einer erhöhten biologischen Aktivität der getrennten Feststoffe, die unter Umständen zunächst in den Prozesskreislauf zurückgeführt werden können. Sie tragen dazu bei, daß die vorhandene Biomasse für eine weitere Reaktion zur Verfügung steht. Wird der Anteil an Biomasse zu hoch, so werden die überschüssigen Anteile abgezogen, damit sich wieder eine optimale Konzentration einstellt.

Bei der oben beschriebenen Vorrichtung ist es möglich, die Leistung eines Prozesses durch höhere Feststoffkonzentrationen zu verbessern, bzw. die Volumina der Anlagen zu reduzieren. Entsprechend kann dann durch die Verringerung der erforderlichen Volumina bei vorhandenem Becken Platz für einen weiteren Prozeßschritt geschaffen werden. Dies ist beispielsweise bei der aeroben biologischen Abwasserreinigung die heute dringend erforderliche Denitrifikation zur Stickstoffelemination. Dabei wird die konzentrierte Biomasse durch interne Rezirkulation abgesaugt und dem jetzt in dem bestehenden Becken eingerichteten Denitrifikationsvolumen zugeführt. Die bestehenden technischen und baulichen Einrichtungen (Abwasserleitungen und maschinentechnische Ausrüstung), können dabei weiter genutzt werden. Baumaßnahmen wie die Schaffung neuer Denitrifikationsvolumen und die dabei völlige Änderung der hydraulischen Abwasserführung werden nicht oder nur eingeschränkt erforderlich.

Zusammenfassend kann daher festgestellt werden, daß die Effizienz der Abwasserreinigung durch die oben beschriebenen Maßnahmen deutlich erhöht wird, wodurch bei gleichen Volumina der Vorrichtungen ein erheblich gesteigerter Durchsatz möglich wird. Dies führt letztendlich zu einer Reduzierung der durchsatzspezifischen Investi

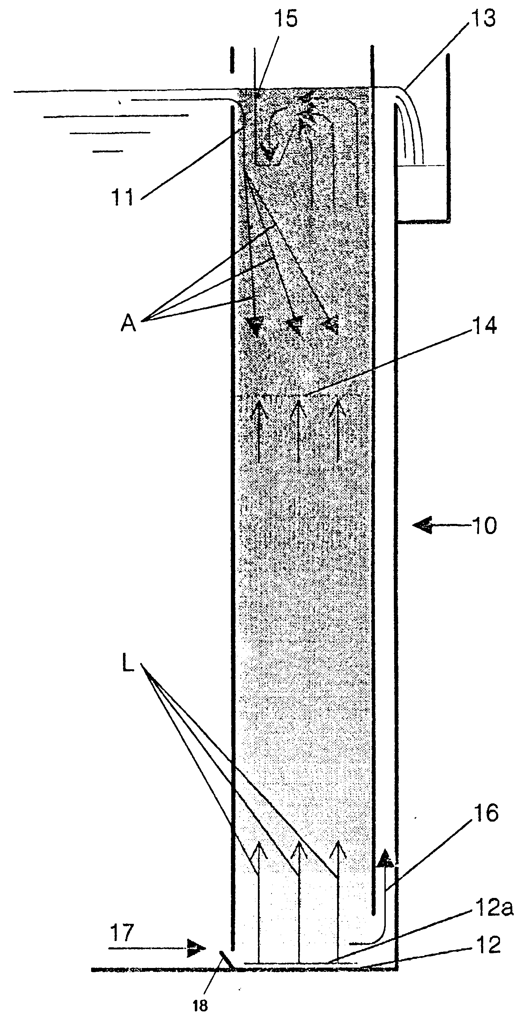

## Patentansprüche

1. Verfahren zur Abwasserbehandlung,
bei dem das Abwasser im oberen Teil eines eingerichteten Trennraums (10) eines aufrechtstehenden, zylinderförmigen Behälters über einen Zulauf (11) zugeführt wird, wobei das Abwasser in dem Trennraum (10) eine Oberfläche bildet und dem Trennraum ein Boden (12) des Behälters zugeordnet ist,
bei dem am unteren Ende des Trennraums (10) ein Luftstrom über eine Einrichtung (12a) eingeführt wird, die für eine äußerst feinblasige Verteilung des eingeführten Luftstroms sorgt, und ein Gegenstrom von äußerst feinen Luftblasen zum Abwasser gebildet wird,
bei dem ein Großteil aller Feststoffe des Abwassers abgeschieden und abgeführt wird und
bei dem das behandelte Wasser am unteren Ende des Trennraums (10) über einen Ablauf (16) abgeführt wird,
dadurch gekennzeichnet,
daß die Abscheidung und Abfuhr des Großteils aller Feststoffe an der Oberfläche erfolgt und zwar die Abscheidung mittels des Gegenstroms der feinen Luftblasen zum Abwasser und
daß die äußerst feinteilige Verteilung des Luftstromes mittels der Einrichtung (12a) am Boden (12) erfolgt.

2. Verfahren nach Anspruch 1, dadurch gekennzeichnet, daß die Abscheidung mittels mindestens einer in vertikaler Flußrichtung gesehen im Trennraum (10) vorhandener mechanischer Trennfläche (14) verstärkt wird.

3. Verfahren nach Anspruch 1 oder 2, dadurch gekennzeichnet, daß mittels eines am Boden (12) des eingerichteten Trennraums (10) vorgesehenen steuerbaren Verschlusses (18) die Wassergeschwindigkeiten geregelt werden.

4. Verfahren nach Anspruch 1, 2 oder 3, dadurch gekennzeichnet, daß die Abfuhr mittels mindestens einer Skim-Vorrichtung (15) im oberen Teil des eingerichteten Trennraums (10) erfolgt.

## Claims

1. A method for the treatment of waste water,
in which the waste water is delivered in the upper part of a unidirectional separation space (10) of an upright, cylindrical container via an intake (11), the waste water forming a surface in the separation space (10) and a floor (12) of the container being assigned to the separation space,
in which a stream of air is introduced at the lower end of the separation space (10) via a device (12a) which ensures that the stream of air introduced is distributed as extremely fine bubbles, and a counter-flow of extremely fine air bubbles to the waste water is formed,
in which a major part of all solids in the waste water is precipitated and discharged, and
in which the treated water is discharged at the lower end of the separation space (10) via an outlet (16),
characterised in that
the precipitation and discharge of the major part of all solids occurs at the surface, the precipitation by means of the counter-flow of fine air bubbles to the waste water, and the extremely fine distribution of the air flow occurs by means of the device (12a) on the floor (12).

2. A method according to Claim 1, characterised in that the precipitation is enhanced by means of at least one mechanical separation surface (14) present in the separation space (10) when viewed in a vertical direction of flow.

3. A method according to Claim 1 or 2, characterised in that the water speeds are regulated by means of a controllable flap (18) provided on the floor (12) of the unidirectional separation space (10).

4. A method according to Claim 1, 2 or 3, characterised in that the discharge occurs by means of a skimming device (15) in the upper part of the unidirectional separation space (10).

## Revendications

1. Procédé de traitement d'eau usée, selon lequel l'eau usée est acheminée par l'intermédiaire d'une amenée (11) dans la partie supérieure d'une chambre de séparation installée (10) d'un réservoir cylindrique vertical, l'eau usée formant dans la chambre de séparation (10) une surface et à la chambre de séparation étant associé un fond (12) du réservoir,
selon lequel à l'extrémité inférieure de la chambre de séparation (1) est introduit un écoulement d'air par l'intermédiaire d'un dispositif assurant une division à bulles extrêmement fines de l'écoulement d'air introduit, et un contre-courant de bulles d'air extrêmement fines est formé vis-à-vis de l'eau usée,
dans lequel une grande partie de toutes les matières solides de l'eau usée est séparée et évacuée, et
dans lequel l'eau traitée est évacuée à l'extrémité inférieure de la chambre de séparation (10) par l'intermédiaire d'un écoulement (16),
caractérisé en ce que la séparation et l'évacuation de la grande partie de toutes les matières solides s'effectuent à la surface et la séparation s'effectue au moyen du contre-courant des fines bulles d'air par rapport à l'eau usée, et
en ce que la division extrêmement fine de l'écoulement d'air au moyen du dispositif (12a) s'effectue au fond (12).

2. Procédé selon la revendication 1, caractérise en ce que la séparation est renforcée au moyen d'au moins une surface de séparation (14) mécanique prévue dans la direction d'écoulement vertical en regardant dans la chambre de séparation (10).

3. Procédé selon la revendication 1 ou 2, caractérisé en ce que les vitesses de l'eau sont régulées au moyen d'une fermeture (18) commandée prévue sur le fond (12) de la chambre de séparation installée (10).

4. Procédé selon la revendication 1, 2 ou 3, caractérisé en ce que l'évacuation s'effectue au moyen d'au moins un dispositif d'écumage (15) dans la partie supérieure de la chambre de séparation installée (10).
